# EUROPEAN PATENT APPLICATION

(11) **EP 1 724 673 A2**
(43) Date of publication of application: **22.11.2006**
(21) Application number: 06113794.9
(22) Date of filing: 11.05.2006
(51) Int. Cl.: G06F 3/12

(54) **Method, apparatus and computer program product for viewing on a client computer documents data to be printed**

(30) Priority: 17.05.2005 EP 05291055
(71) Applicant: Océ-Technologies B.V., 5914 CA Venlo (NL)
(72) Inventor: Appercel, Stéphane P.R., 91300, Massy (FR)
(74) Representative: Van de Sande, Jacobus

(57) **Abstract**

The invention relates to a method, an apparatus and a computer program for viewing on a client computer documents data to be printed. A client computer comprises a version y of a conversion function for converting document data into raster image data and a version z of a client viewer application. A print server comprises a version x of the conversion function and a version x of the client viewer application. The method comprises the steps of replacing on the client computer the version y of the conversion function by the version x of the conversion function, if the version x is more recent than the version y; installing on the client computer the version x of the client viewer application, if the version z is different from the version x; converting on the client computer the document data and displaying the image data.

## Description

The invention relates to a method for viewing on display means of a client computer image data representing document data to be rendered by a print engine on a print medium according to print specifications, the client computer being arranged for exchanging data with a print server through a network, the print server being arranged for sending print instructions to the print engine, the client computer comprising a version y of a conversion function for converting document data into raster image data describing a dot arrangement to be rendered by the print engine and a version z of a client viewer application for viewing the image data according to the print specifications, the print server comprising a version x of the conversion function and a version x of the client viewer application.

The invention also concerns an apparatus comprising a print engine, a client computer with display means for viewing image data representing document data to be rendered by the print engine on a print medium according to print specifications, a print server for sending print instructions to the print engine and arranged for exchanging data with the client computer through a network, the client computer having stored on a memory a version y of a conversion function for converting document data into raster image data describing a dot arrangement to be rendered by the print engine and a version z of a client viewer application for viewing the image data according to the print specifications, the print server having stored on a memory a version x of the conversion function and a version x of the client viewer application.

The invention also concerns a computer program product residing on a computer readable medium comprising instructions for causing at least one process unit to carry out the method of the invention.

Most networks include a number of print servers for sending print instructions to print engines and a number of client computers sharing the resources of the print servers so that the print engines may be used by many users of the network. Documents to be printed are sent from a client computer using a job submitter that transmits a print job from the client computer to the print server. The print jobs are executed by the print engine according to print instructions sent by the print server.

Before actually printing a document on a selected print engine, a user may need to preview the document as it will be printed by the print engine, this to verify that the print specifications are correct and that graphics and outline fonts will be rendered properly. The client computer is provided with display means, such as a monitor screen, whereon image data representing document data to be rendered by a print engine on a print medium according to print specifications can be displayed. To ensure a proper preview, a conversion function is installed on the client computer for converting document data into raster image data describing a dot arrangement as to be rendered by the print engine. The conversion function comprises an interpreter function and a rasterizer function. A dedicated application software installed on the client, called a client viewer application, is used for viewing the image data according to the print specifications. For example, print specifications such as medium size and positioning of the image data on the medium can be checked during the preview step. Other print specifications may be also visualised, such as the orientation of the image data with respect to the print medium, the dimensions of the print margins, the position of a staple, the presence of a watermark etc.

The print server is provided with a controller having installed thereon a conversion function. The conversion function comprises an interpretation function and a rasterization function. The interpretation function of the controller examines the data sent from the client computer and identifies the command embedded in the data, such as printer control, page format, font management, text layout and graphics. The print server conversion function is used to convert the received commands into an array of dots to be rendered by the print engine. The print server is provided with a raster image processor (RIP) for executing the conversion tasks. The print server can also be provided with a version of a client viewer application, this in order to update the client viewer application on the client computer when this is required. This may be needed when the print engine has been upgraded with new technical features enabling the use of new print settings.

To ensure consistency between the preview displayed on the client's display means and the image data to be printed by the print engine (i.e. a dot arrangement to be rendered by the print engine), a known method comprises systematic updating of the software installed on the client computer with every update of the print server's software. According to the known method, the version of the client viewer application and the version conversion function on the client are updated each time the conversion function of a print server is updated. When a user of a client computer wishes to obtain a preview of a document to printed on a print engine, it connects to the adequate print server, this in order to compare the versions of the software installed on the respective machines. The print server comprises for example a version x of the conversion function and a version x of the client viewer application. If the versions of the conversion function and of the client viewer application on the client computer are different from the version x, a version x of the conversion function and a version x of the client viewer application are transferred to the client computer. However this method a number of drawbacks such as complexity. This is particularly the case for large network systems, where many users have the ability to connect to a large number of print servers. Usually, not all print servers arranged for sending print instructions to the same type of print engine are updated at the same moment. Therefore, it happens that various print servers use different versions of the conversion function. With the known method of viewing wherein a systematic update of the client computer software is performed, the software on the client computers can have a very large footprint, because of the many versions installed thereon, which generates high costs. Moreover, the systematic upgrade might overload a print server when many users are connected concurrently to said print server.

The present invention seeks to provide a method in which these problems are mitigated. It is accordingly an object of the present invention to provide an improved method for viewing on a client computer documents data to be printed.

According to the invention, this object is achieved by the steps of:
- replacing on the client computer the version y of the conversion function by the version x of the conversion function, if the version x is more recent than the version y;
- installing on the client computer the version x of the client viewer application, if the version z is different from the version x;
- converting on the client computer the document data into raster image data, using the version of the conversion function on the client computer;
- displaying image data representing document data to be rendered according to the print specifications, using the version x of the client viewer application.

In the viewing method according to the invention, the print server is involved only for the supply to the client computer of a version of the conversion function and a version of the client viewer application, if certain conditions are fulfilled. It may happen that the version y of the conversion function installed on the client computer is more recent than the version x1 of the conversion function installed on a first print server with which print data are to be exchanged. This may happen when the client computer previously had been connected to another second print server having the latest version x2 available of the conversion function and the client computer had been updated with the version x2 of the conversion function and the version x2 of the client viewer application. In such a case (y=x2), wherein the version y of the conversion function installed on the client computer is more recent than the version x1 installed on a first print server with which print data are to be exchanged, there is no transfer of the conversion function from the first print server to the client computer. This is generally not required, thanks to the backward compatibility of the conversion function. However, in this situation, the version x1 of the client viewer application which is present on the print server is installed on the client computer. This ensures that the image data can be viewed according to the print specifications. This is achieved by a version x1 of the client viewer application having the same release as the version x1 of the conversion function installed on the first print server. Summarising this example, the conversion function on the client computer remains x2 and a version x1, less recent than x2, of the client viewer application is installed on the client computer.

It can be noted that the print server is not involved in the step of converting the document data into raster image data for viewing purposes. An major benefit is that a large number of users, each one logged on a different client computer can view image data representing document data to be rendered by a print engine without overloading the print server, which would be the case if the step of converting the document data into raster image data for viewing purposes was performed on the print server by many users. Of course, the resolution of the image displayed on the display means of the client computer (for example, 100 dpi) may differ from the resolution of the dot arrangement to be rendered by the print engine (for example 600 dpi). Moreover, the colours in the document are rendered by the display device using a different colour separation from the one used by the print engine. However, the view obtained on the display means is as accurate as possible, mainly due to the fact that the use of the conversion function leads to a similar visual aspect of the raster image data rendered by both the client computer's display means and the print engine.

The apparatus according to the invention is characterised in that the client computer and the print server each comprises a processor unit for applying an update and viewing algorithm, executing the steps of:
- replacing on the client computer the version y of the conversion function by the version x of the conversion function, if the version x is more recent than the version y;
- installing on the client computer the version x of the client viewer application, if the version z is different from the version x;
- converting on the client computer the document data into raster image data, using the version of the conversion function on the client computer;
- displaying image data representing document data to be rendered according to the print specifications, using the version x of the client viewer application.

The invention relates to a method, an apparatus and a computer program for viewing on a client computer documents data to be printed. A client computer comprises a version y of a conversion function for converting document data into raster image data and a version z of a client viewer application. A print server comprises a version x of the conversion function and a version x of the client viewer application. The method comprises the steps of replacing on the client computer the version y of the conversion function by the version x of the conversion function, if the version x is more recent than the version y; installing on the client computer the version x of the client viewer application, if the version z is different from the version x; converting on the client computer the document data and displaying the image data.

The invention will now be explained with reference to the following exemplified embodiment of the present invention, and illustrated by reference to the drawings. The embodiment serves to illustrate the invention and should not be regarded as a limitation thereof.
Fig. 1 is a schematic diagram of a number of clients connected to a number of print servers in a network environment, for use in connection with the invention.
Fig. 2 is a schematic diagram of a print engine and a print server, for use in connection with the invention.
Fig. 3 is a simplified component diagram comprising an embodiment of an apparatus according to the invention.
Fig. 4 is a flow diagram showing an embodiment of the method according to the invention.

The invention can be used for viewing any type of document to be printed, and is particularly useful for viewing wide format originals colour images with randomly distributed areas containing small details. Engineering drawings are a typical example of such originals. The documents to be printed can have formats such as HP-GL/2, Calcomp, PostScript/PDF... The method according to the invention is particularly useful when vector-based graphics are to be viewed on the client computer before printing them. It is particularly useful to obtain a view of vector-based graphic objects such as a line, since critical visual aspects such as line thickness and colours can be checked before actually printing. It is also very useful in order to obtain a proper view of outline fonts.

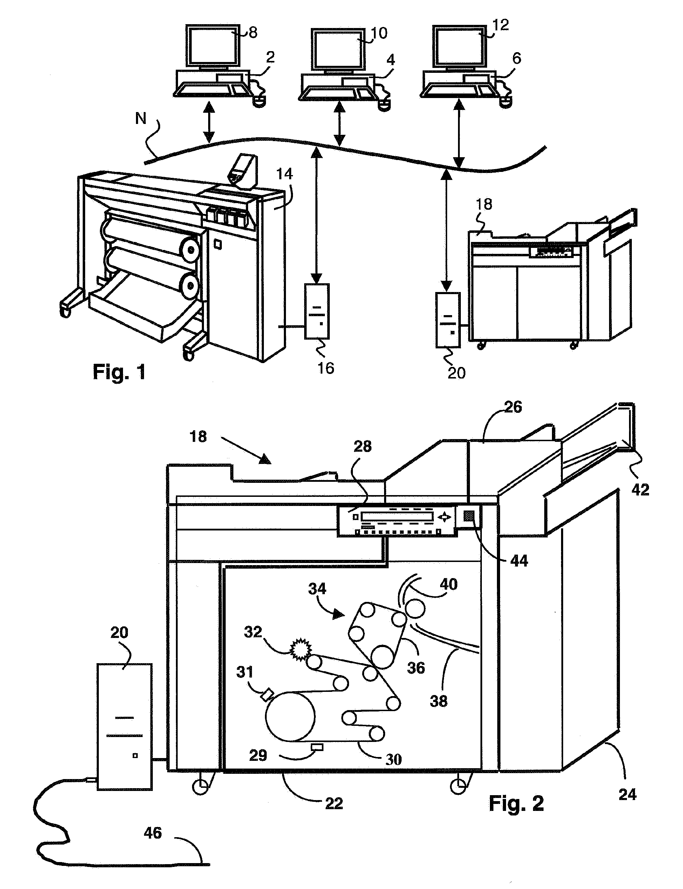

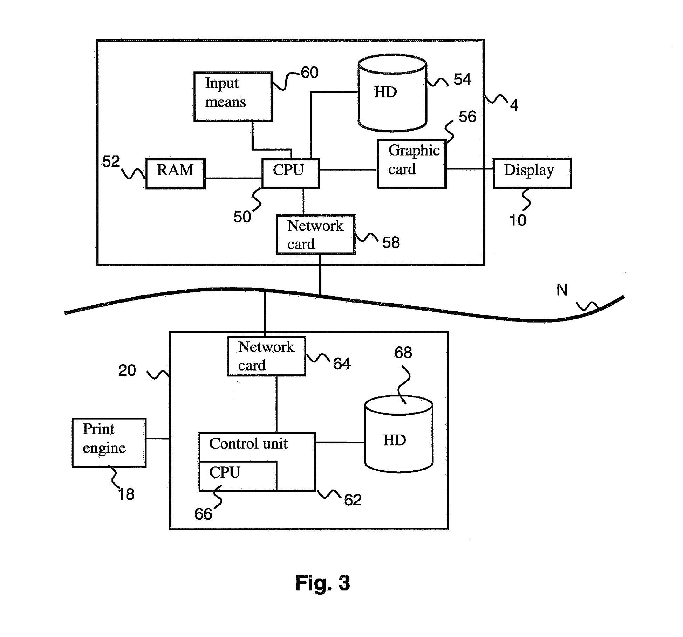

Fig. 1 shows a system comprising a number of client computers 2, 4, 6, a number of print engines 14, 18 and a number of print servers 16, 20 connected by a local network N. The print servers 16 and 20 are used for sending print instructions to, respectively, the print engine 14 and the print engine 18. The client computers 2, 4, 6 are connected through a network N to the print servers 16 and 20 of which they share the resources. The client computers 2, 4, 6 are for example workstations, to which display units are connected, respectively the display units 8, 10, 12. A client computer (for example the workstation 4) comprises at least one central processing unit 50 (shown in Fig. 3), a random access memory 52, a hard disk 54, a graphic card 56 and a network card 58. A display unit 10, like a monitor is connected to the client computer 4 for displaying purposes. The client computer 4 also comprises input means 60, for example a keyboard and a mouse or other indicator instruments. A user having a document stored on the hard disk 54 and wanting to print said document can choose for that purpose from a number of print engines connected to the local network N, such as the print engines 14 and 18.

Fig. 2 shows a print server 20 for sending print instructions to a print engine 18 of which various parts are illustrated diagrammatically. The print engine 18 can use any number of printing techniques. It can be a thermal inkjet printer, a pen plotter, or a press system based on organic photoconductor technology, for instance. Colour printing is achieved for example using an inkjet printer provided with four different basic inks, like cyan, magenta, yellow and black. In the example of Fig. 2, the print engine 18 comprises a printer unit 22 for making prints of images on print media in accordance with digital image data, a supply unit 24, a finishing and outputting section 26 for print media and a user interface unit 28. The control unit 62 and the network connection unit 64 of the print server 20 are connected to different parts of the print engine 18.

The printer unit 22 shown in Fig. 2 comprises an electro-photographic processing stage known per se, in which a photo-conductive medium 30 in the form of a belt is charged by means of a corona unit 29 and then exposed by means of an LED array 31 in accordance with digital image data. The charge image thereby formed on the medium 30 is developed with toner powder in a developing unit 32, after which the toner image is transferred, in a combined transfer and fixing unit 34, to a heated rubber belt 36. The toner powder softens on this belt 36 as a result of the heat of the belt 36 and becomes tacky. It is then transferred and fixed on a print medium, usually a sheet of paper, fed from a supply stage via a conveyor 38.

A supply of print media, for example sheets of paper in different sizes and orientations is available in the supply unit 24.

The print media with the toner image are transported via a conveyor 40 to the finishing and outputting section 26, which if necessary collates them into sets and staples them and then deposits them in the delivery tray 42.

The user interface panel of the unit 28 is provided with a display screen and keys. The user interface unit 28 is connected to the control unit 62 and the network connection unit 64 of the print server 20. The unit 28 also includes a contact lock 44 for switching on and off the print engine and other input means such as buttons for selecting a user, setting queuing parameters etc.

The control unit 62 of the print server 20 is connected to the print engine 18 as is diagrammatically shown in Fig. 3. The control unit comprises a central processing unit 66 and can access a memory 68 such as a hard disk and suitable hardware circuits. The control unit 62 further comprises modules for controlling the units 22, 24, 26 and 28 of the print engine 18. The control unit 62 also comprises an image processing module for processing the digital image data so that prints of good image quality can be made by the printer unit 22.

The print server 20 connected to the print engine 18 also comprises a network connection unit 64 for connection to a local network N, which is diagrammatically shown in the form of a cable 46 in Fig. 2. The network connection unit receives print jobs from the client computers (for example, from one of the workstations 2, 4 or 6), converts them in a format that can be processed by the print unit 22 and ensures in co-operation with the control unit 62 that the digital images are printed on print media.

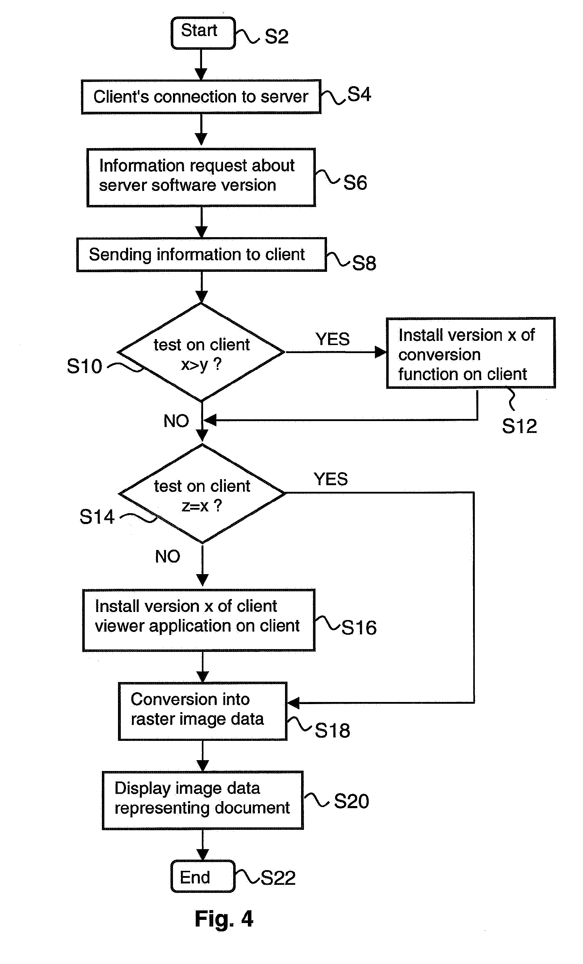

An embodiment of the method according to the invention is now explained referring to Fig. 4. In step S2, a computer program is started by a user logged on a client computer 4 wishing to preview on a monitor 10 document data to be rendered by a selected print engine 18 on a print medium according to print specifications. The computer program then performs the steps of the diagram shown in Fig. 4. The client computer 4 is provided with display means 10 such that image data representing said document data can be viewed by the user, this to control the aspect of the dot arrangement to be printed on a print medium.

The client computer comprises a version y of a conversion function for converting document data into raster image data describing a dot arrangement to be rendered by the print engine 18 and a version z of a client viewer application for viewing the image data according to the print specifications. The version y of the conversion function and the version z of the client viewer application are for example installed on the hard disk 54 of the client computer 4 in the form of executable programs. To ensure consistency between the preview to be displayed on the monitor screen 10 and the image to be printed by the print engine 18, the client viewer application has to be aware of the parameters specific to the selected print engine 18, for example printer margins, print medium available, paper size, positioning of the printed image with respect to the paper etc. Therefore, in step S6, information about the print server 20 is requested by the client computer 4 through the network N.

The print server 20 for sending print instructions to the selected print engine 18 comprises a version x of the conversion function and a version x of the client viewer application. The version x of the conversion function and the version x of the client viewer application are for example stored on the hard disk 68 of the print server 20 in the form of executable programs. The print server 20 is suited for supplying, among other client computers, a client computer 4 with applications such as a conversion function and a client viewer application. The information requested by the client computer 4, i.e. the version number x of the conversion function, is sent through the network N by the print server to the client computer in step S8.

In step S10, a test is performed on the client computer 4 in order to determine whether the version x of the conversion function is more recent than the version y of the conversion function. If the version x of the conversion function is more recent than the version y of the conversion function (i.e. if x>y) then step S12 is performed. In step S12, the version y of the conversion function is replaced on the client computer by the version x of the conversion function. In a network environment wherein the client computer 4 can exchange data with a number of print servers for sending print instructions to the same type of print engine, the combination of step S10 with step S12 ensures that the client computer 4 is provided with the most recent version of the conversion function among the versions installed on the print servers it connects to. Generally, a conversion function is backward compatible with older conversion functions, meaning that a more recent version is able to performs the tasks which a previous version was able to perform. After the step S12 has been completed, the program goes to step S14.

If the result of the test performed in step S10 is no, meaning that the version x of the conversion function on the print server 20 is as or less recent than the version y of the conversion function on the client computer 4, then the application goes directly to step S14.

In step S14, a boolean test is performed by the program, in order to determine whether the version z of the client viewer application on the client computer 4 is the same as the version z of the client viewer application on the print server 20. If said versions z and x are the same, the program causes the steps S18 and S20 to be started. If the version z of the client viewer application on the client computer is not the same as the version x of the client viewer application installed on the print server, then step S16 is performed. In step S16, the version x of the client viewer application is installed on the client computer. After the step S16, the steps S18 and S20 are performed.

In step S18, the document data are converted on the client computer 4 into raster image data for viewing purposes using the version of the conversion function installed on the client computer.

In step S20, image data representing document data to be rendered according to the print specifications is displayed , using the version x of the client viewer application. It should be noted that this version x has the same number as the version x of the conversion function installed on the print server 20 for print purposes. This ensures that the view obtained in the display means 10 is having a visual aspect as accurate as possible, taking into account the dot arrangement of the raster image to be rendered by the print engine and a correct visual representation of the print specifications such as print medium dimensions and position of the image on the print medium.

Then the program is ended (S22) and the user may choose to print the document data on the selected print engine.

## Claims

1. Method for viewing on display means of a client computer image data representing document data to be rendered by a print engine on a print medium according to print specifications, the client computer being arranged for exchanging data with a print server through a network, the print server being arranged for sending print instructions to the print engine, the client computer comprising a version y of a conversion function for converting document data into raster image data describing a dot arrangement to be rendered by the print engine and a version z of a client viewer application for viewing the image data according to the print specifications, the print server comprising a version x of the conversion function and a version x of the client viewer application, comprising the steps of:
- replacing on the client computer the version y of the conversion function by the version x of the conversion function, if the version x is more recent than the version y (S12);
- installing on the client computer the version x of the client viewer application, if the version z is different from the version x (S16);
- converting on the client computer the document data into raster image data, using the version of the conversion function on the client computer (S18);
- displaying image data representing document data to be rendered according to the print specifications, using the version x of the client viewer application (S20).

2. Method for viewing on display means of a client computer image data representing document data to be rendered by a print engine as claimed in claim 1, the print specifications comprising a number of parameters specific to the print engine.

3. Method for viewing on display means of a client computer image data representing document data to be rendered by a print engine as claimed in claim 2, a parameter specific to the print engine being the format of the print medium.

4. Method for viewing on display means of a client computer image data representing document data to be rendered by a print engine as claimed in claim 2 or 3, a parameter specific to the print engine being the position of the image data with respect to the print medium.

5. Method for viewing on display means of a client computer image data representing document data to be rendered by a print engine as claimed in claim 1 or 2, the print specifications comprising a scaling factor to be applied to the image data.

6. Method for viewing on display means of a client computer image data representing document data to be rendered by a print engine as claimed in claim 1 or 2, the print specifications comprising the angle of a rotation to be applied to the image data.

7. Apparatus comprising a print engine (18), a client computer (4) with display means (10) for viewing image data representing document data to be rendered by the print engine (18) on a print medium according to print specifications, a print server (20) for sending print instructions to the print engine (18) and arranged for exchanging data with the client computer through a network (N), the client computer (4) having stored on a memory (54) a version y of a conversion function for converting document data into raster image data describing a dot arrangement to be rendered by the print engine and a version z of a client viewer application for viewing the image data according to the print specifications, the print server (20) having stored on a memory (68) a version x of the conversion function and a version x of the client viewer application, the client computer (4) and the print server (20) each comprising a processor unit (50, 66) for applying an update and viewing algorithm, executing the steps of:
- replacing on the client computer the version y of the conversion function by the version x of the conversion function, if the version x is more recent than the version y;
- installing on the client computer the version x of the client viewer application, if the version z is different from the version x;
- converting on the client computer the document data into raster image data, using the version of the conversion function on the client computer;
- displaying image data representing document data to be rendered according to the print specifications, using the version x of the client viewer application.

8. Computer program product residing on a computer readable medium comprising instructions for causing at least one process unit to perform the method of any of the claims 1 to 6.
